# EUROPEAN PATENT SPECIFICATION

(11) **EP 4 384 439 B1**
(45) Date of publication and mention of the grant of the patent: **29.04.2026**
(21) Application number: 22881439.8
(22) Date of filing: 30.09.2022
(51) Int. Cl.: B63B 1/20, B63B 1/04, B63B 1/22, B63B 1/26, B63B 1/28, B63B 1/18

(54) **A BOAT HULL**
BOOTSRUMPF
COQUE DE BATEAU

(30) Priority: 16.10.2021 NO 20211248; 22.11.2021 NO 20211393
(43) Date of publication of application: 19.06.2024
(73) Proprietor: SvelaCat AS, 1610 Fredrikstad (NO)
(72) Inventor: LARSEN, Sverre Egil, 1610 Fredrikstad (NO)
(74) Representative: AWA Norway AS
(86) International application number: PCT/NO2022/000004
(87) International publication number: WO 2023/063829

(56) References cited:
- WO-A1-2011/117906
- WO-A1-93/12967
- WO-A2-2020/056530
- GB-A- 1 025 454
- US-A- 1 265 035
- US-A- 2 757 629
- US-A- 3 871 317
- US-A- 3 991 698
- US-A- 5 619 944
- US-A- 5 676 087
- US-A- 6 138 602
- US-A1- 2018 001 963
- US-B1- 6 729 258

## Description

### Field of the Invention

The present invention relates to the field of watercrafts, and in particular to a boat hull with planing properties.

### Background

Most boats built for planing speeds are made with V-shaped bottom profile or as catamarans with two separate hulls. Both types have their good and bad characteristics.

V-shaped hulls are splitting waves and pushing water sideways. The sharper the V-shape is, the softer ride in rough seas, but it also gives the boat less lateral stability.

The catamarans have good lateral stability and may have good planing characteristics as well, if the side-hulls have the right bottom profile, but they are wide and clumsy to handle in narrow harbors. Catamarans have a flat part above sea level between the two hulls, and in rough sea this flat bottom may get damaging hard strokes against the waves.

The overwhelming majority of boats built for planing speeds opt for a V-shaped bottom profile and are powered by either sterndrives or outboard engines. Since the propellers are located under the stern, the pushing forces create a moment that will raise the bow and push the stern down. Different kinds of trim flaps are used to reduce this immersion, but such hull-extending elements have limited effect and often brakes more than they are lifting.

There are other hulls designed with some form of concave bottom profile and bearing surfaces along the sides as well, as in e.g., GB1025454A and WO2011117906A1, but both designs have their flat or sideways slightly angled bearing surfaces stretched forward almost to the bow, which will have some unfortunate consequences, as explained below.

GB1025454A describes a hull which has a flat bearing surface built down as a kind of step strip along each side of the bottom, from the stern and forwards for approx.

90% of the length of the waterline. Since the propeller-thrust creates a moment pushing the stern down and the bow section up, horizontal bearing surfaces under the front half of the hull have little or no utility value, but they give harder blows against waves and more unpleasant rides in rough sea, than a V-shaped bow section.

Claim 1 of GB1025454A also states that these long bearing surfaces, in addition to giving the boat a lift, are intended to catch lateral waves created by the bow and push water towards the center of hull. Fig. 5 of the drawing clearly shows that the distance between the bearing surfaces is approximately 60% larger in the front end than aft. This funnel-like construction will continuously push water masses sideways towards the keel from both sides, which must mean increased fuel consumption, without any obvious positive effect. The hull tapers backwards towards the stern where the need for bearing surface is greatest.

WO2011117906A1 describes a hull having inclined bearing surfaces extending from the bow to the transom. These bearing surfaces are inclined approx. 30 degrees transverse and will therefore give significantly less lift than horizontally lying bearing surfaces. Because the bearing surfaces described here extend all the way to the bow, they will give the front half of the hull a significantly harder blow against waves, compared to the clean V-shaped bow section of the invention. The hull described in WO2011117906A1 may also be perceived as an ordinary hull with a V profile from bow to stern, but with an out hollowed rear part. This hull tapers backwards towards the stern where the need for bearing surface is greatest.

US2757629 describes a dinghy or small boat with a flat bottom and square bow 25 section. At the rear section, the boat is provided with two stabilizers mounted on the bottom. These stabilizers are long hollow canisters which are partially open and will become filled with water while the boat is moving slowly or lying dead in the water. Improved sideways stability is obtained due to the inertia of the trapped water masses.

### Summary of the Invention

It is an object of the present invention to provide a boat hull which is easily planing, is stable and rides softly in rough sea. This is achieved in a boat hull as claimed in the appended claims.

The boat hull according to the invention includes a V-shaped bow section in the centerline, gradually transformed to water ski like planing surfaces in the sides of a concave bottom profile in the rear half of the hull, designed to lift and keep the boat planing on these water ski surfaces. To avoid hard impacts against the sea, there are no horizontal bearing surfaces in the V-shaped front half of the hull of the invention.

This invention significantly improves this immersion problem of conventional V-shaped hulls due to the flat water ski surfaces in the rear half of the hull. Instead of pushing water sideways like a V-bottom, the flat ski areas take advantage of the inertia of water masses to get a lift.

### Brief Description of the Drawings

Further properties and advantages of the invention will appear from the following detailed description and the appended drawings, in which
Fig. 1 is a perspective drawing of a first embodiment of the inventive hull,
Fig. 2 is a perspective drawing of a second embodiment,
Fig. 3 is a perspective drawing of a third embodiment, and
Fig. 4 are perspective drawing of the embodiment shown in Fig. 1 as seen from the forward and aft end of the hull.

### Detailed Description

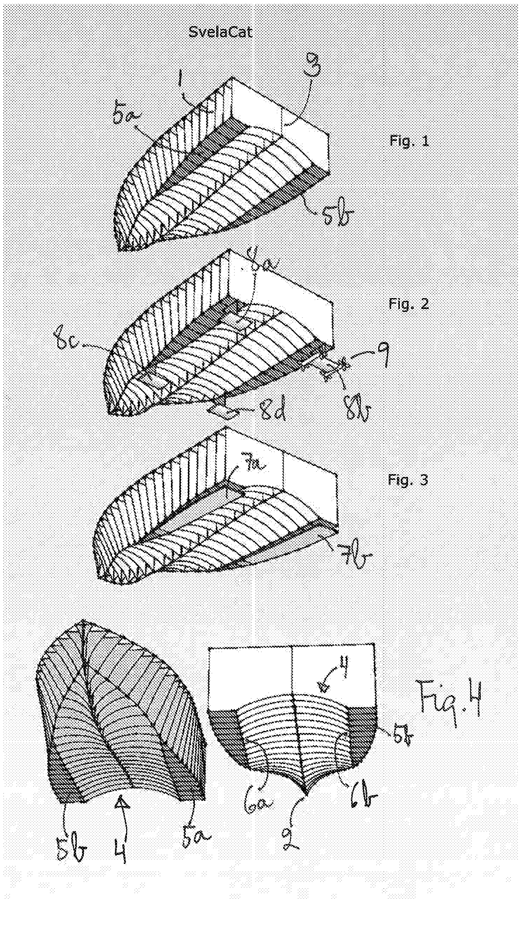

Fig. 1 is a perspective view of a first embodiment of the invention, with traces 1 illustrating internal planes defining the shape of the hull. The inventive hull has steep upper side panels and a flat stern in this drawing, but surfaces above the waterline can also have other shapes. In the forward half of the hull there is a long and deep V-bottom 2. The V-bottom 2 forms concave parts on each side of the centre line 3. At the rear half of the hull, the bottom will gradually transform into a fully concave part or "tunnel" 4 centered on the centre line 3. Further, on this rear half of the hull there are two lateral planing surfaces 5a, b, which are shaped like water skis. The planing surfaces may be realized as an integrated part of the hull, or as a separate set of water ski element fastened to the underside of the hull.

The inner edges 6a, 6b of the planing surfaces, i.e. the edges facing each other, may preferably be parallel. The shape of the hull will be more clearly observed from Fig. 4, which shows the hull as seen at the bow and from the stern side.

With the inventive water ski surfaces permanently built in as a part of the hull body itself, adjustment of the boats longitudinal angle may be controlled by engine power and tilting of the propeller-unit. With a separate set of water ski elements 7a, b (Fig. 3) even transverse angles may be adjusted. These skies 7a, b are independent elements, which can be hinged in front or have adjustable height both front and rear. To counteract the centrifugal force in turns, the skis 7a, b can even have individual adjustment of lateral angles. The water skis 7a, b can be mounted on resilient elements to reduce the force of hard landings in rough sea.

Both the built-in surfaces 5a, b and the separate mounted water ski elements 7a, b of the invention are shaped and dimensioned according to the intended use and speed range of the boat in question, and the distance between the surfaces/skis may be reduced by relocating them from the sides to a place closer to the center line of the hull. They can have the same width over the entire length, or have other shapes, such as e. g. gradually increasing width backwards against the stern or transom. Each planing surface or water ski 5a, b; 7a, b has mainly a horizontal cross-sectional profile, but the underside can have a straight line, concave, convex or other surface structures.

The separate water ski elements 7a, b may also be built with extended length and shape to have the entire boat, including the bow section, lifted out of the water when driving in planing speeds.

The bottom profile of the invention is also well suited for the addition of hydrofoils, with or without integrated propulsion units. Fig. 2 is a sketch of an embodiment of the inventive hull with four T-shaped foils 8a - d, one (8b) with a symbol of electric propulsion units or pods 9 as an example. The foils may have different kind of design and sizes, separate units or long elements crossing the hull from side to side, adjustable or permanently mounted.

Hydrofoil units 8a - d may be fixed mounted or built individually adjustable so that the boat's transverse and longship angles in relation to the sea surface can be changed during driving. The hydrofoil units 8a - d can be built so high that the entire boat is lifted above the water surface, and they can be fully or partially retractable into the hull.

## Claims

1. A hull for a vessel with a bow and stern, **characterized in that** the hull includes a V-shaped bow section (2) in a centerline (3) at a front half of the hull gradually transformed to a concave bottom profile (4) at a rear half of the hull, and two lateral horizontal planing surfaces (5a, b; 7a, b) at the rear half of the hull, the planing surfaces shaped like water skis, and wherein there are no horizontal bearing surfaces in the V-shaped front half of the hull.

2. The hull according to claim 1, wherein the planing surfaces (5a, b; 7a, b) have the same width over the entire length thereof or being horizontal and wedge-shaped with a forward pointing tip and gradually expanding in width towards the stern.

3. The hull according to claim 2, wherein inner facing edges (6a, b) of the planing surfaces (5a, b; 7a, b) are parallel to each other.

4. The hull according to any of the claims 1 - 3, wherein the planing surfaces are separate water ski elements (7a, b) equipped for adjusting of heights and angles when driving.

5. The hull according to claim 4, wherein the water ski elements (7a, b) are mounted with fixed or springy suspensions.

6. The hull according to any of the claims 1 - 5, further including hydrofoil units (8a - d) that may be fully subtracted into the hull.

7. The hull according to claim 6, wherein the hydrofoil units (8a - d) have individually adjustable heights and angles for trimming the vessel's transverse and longitudinal angles when driving.

8. The hull according to claim 6 or 7, wherein propulsion units (9) are installed in or at the hydrofoil units (8a - d).

## Patentansprüche

1. Rumpf für ein Schiff mit einem Bug und einem Heck, **dadurch gekennzeichnet, dass** der Rumpf einen V-förmigen Bugabschnitt (2) in einer Mittellinie (3) in einer vorderen Hälfte des Rumpfes umfasst, der allmählich in ein konkaves Bodenprofil (4) in einer hinteren Hälfte des Rumpfes übergeht, und zwei seitliche horizontale Gleitflächen (5a, b; 7a, b) in der hinteren Hälfte des Rumpfes umfasst, wobei die Gleitflächen wie Wasserskier geformt sind, und wobei in der V-förmigen vorderen Hälfte des Rumpfes keine horizontalen Auflageflächen vorhanden sind.

2. Rumpf nach Anspruch 1, wobei die Gleitflächen (5a, b; 7a, b) über ihre gesamte Länge die gleiche Breite aufweisen oder horizontal und keilförmig mit einer nach vorne weisenden Spitze sind und sich allmählich in der Breite zum Heck hin erweitern.

3. Rumpf nach Anspruch 2, wobei innere zugewandte Kanten (6a, b) der Gleitflächen (5a, b; 7a, b) parallel zueinander sind.

4. Rumpf nach einem der Ansprüche 1 - 3, wobei die Gleitflächen separate Wasserskielemente (7a, b) sind, die zum Einstellen von Höhen und Winkeln beim Fahren ausgestattet sind.

5. Rumpf nach Anspruch 4, wobei die Wasserskielemente (7a, b) mit festen oder federnden Aufhängungen montiert sind.

6. Rumpf nach einem der Ansprüche 1 - 5, der ferner Tragflügeleinheiten (8a - d) beinhaltet, die vollständig in den Rumpf subtrahiert werden können.

7. Rumpf nach Anspruch 6, wobei die Tragflügeleinheiten (8a - d) individuell einstellbare Höhen und Winkel zum Trimmen der Quer- und Längswinkel des Schiffes beim Fahren aufweisen.

8. Rumpf nach Anspruch 6 oder 7, wobei Antriebseinheiten (9) in oder an den Tragflügeleinheiten (8a - d) installiert sind.

## Revendications

1. Coque pour un bateau avec une étrave et une poupe, **caractérisée en ce que** la coque inclut une section d'étrave en forme de V (2) dans un axe central (3) au niveau d'une moitié avant de la coque progressivement transformée en un profil de fond concave (4) au niveau d'une moitié arrière de la coque, et deux surfaces planantes horizontales latérales (5a, b ; 7a, b) au niveau de la moitié arrière de la coque, les surfaces planantes étant formées comme des skis nautiques, et dans laquelle il n'y a aucune surface d'appui horizontale dans la moitié avant en forme de V de la coque.

2. Coque selon la revendication 1, dans laquelle les surfaces planantes (5a, b ; 7a, b) ont la même largeur sur la longueur entière de celles-ci ou sont horizontales et cunéiformes avec un bout pointu avant et s'agrandissant progressivement en largeur vers la poupe.

3. Coque selon la revendication 2, dans laquelle des bords intérieurs se faisant face (6a, b) des surfaces planantes (5a, b ; 7a, b) sont parallèles l'un à l'autre.

4. Coque selon de quelconques des revendications 1 à 3, dans laquelle les surfaces planantes sont des éléments de ski nautique séparés (7a, b) équipés pour l'ajustement de hauteurs et d'angles lors du pilotage.

5. Coque selon la revendication 4, dans laquelle les éléments de ski nautique (7a, b) sont montés avec des suspensions fixes ou à ressort.

6. Coque selon de quelconques des revendications 1 à 5, incluant en outre des unités d'aile portante (8a - d) qui peuvent être entièrement soustraites dans la coque.

7. Coque selon la revendication 6, dans laquelle les unités d'aile portante (8a - d) ont des hauteurs et angles individuellement ajustables pour réduire les angles transversal et longitudinal du bateau lors du pilotage.

8. Coque selon la revendication 6 ou 7, dans laquelle des unités de propulsion (9) sont installées dans les unités d'aile portante (8a - d) ou au niveau de celles-ci.
